# EUROPEAN PATENT APPLICATION

(11) **EP 2 933 760 A1**
(43) Date of publication of application: **21.10.2015**
(21) Application number: 14305550.7
(22) Date of filing: 15.04.2014
(51) Int. Cl.: G06Q 10/02

(54) **Method, system and computer program product of handling electronic miscellaneous documents for voluntary modifications of ancillary services**

(71) Applicant: Amadeus S.A.S., 06410 Biot (FR)
(72) Inventor: Laffitte, Anatole, 06370 Mouans Sartoux (FR); Alberola, Bertrand, 06580 Pegomas (FR); Argano, Manuela, 06600 Antibes (FR); Pellegrin, Caroline, 06370 Moans Sartoux (FR); NGANDO, Garnier, 06300 NICE (FR)
(74) Representative: Lopez, Frédérique

(57) **Abstract**

The present invention relates to a computer-implemented method, a system and a computer program for handling Electronic Miscellaneous Documents (EMD) in case of voluntary passenger modifications of ancillary services. The invention allows processing a request by automatically collecting configuration and pricing information for computing repriced EMD data for the EMD exchange and updating the Passenger Name Record with the new rebooked services.

## Description

### Technical Field

The present invention is in the field of airline ticketing, and relates more particularly to a method, system and computer program product of handling Electronic Miscellaneous Documents for voluntary modifications of ancillary services.

### Background of the Invention

Electronic Miscellaneous Documents (EMDs) are being more and more used by airlines. Electronic Miscellaneous Documents enable agents to issue documents for travel related services, including unbundled airline services. As the industry continues the evolution to a paperless environment, the International Air Transport Association (IATA) and the Airlines Reporting Corporation (ARC), the two organizations that handle travel transactions among suppliers, consumers and agencies, have set the target of a full global implementation of the new technology of EMDs by the end of 2013.

EMDs allow issuing all travel related services, through mainly two types of documents:
- The 'standalone EMD' (EMD-S) which can be used independently from a standard flight ticket, and which can be issued for services such as car rental or lounge access; and
- The 'associated EMD' (EMD-A) which is issued for services directly linked to a flight coupon, such as for example, excess baggage or seat reservation.

It may come that a passenger may want to change one or more of the ancillary services initially planned or exchange a ticket to which EMD(s) is/are associated. Such changes - namely voluntary changes - involve modifications of the original EMD issued for the passenger. The agencies in charge of the EMDs issuance have to handle the changes to provide the passenger with a new document validating the modifications.

Updating an EMD is a critical process which nowadays is manually performed through a series of long and complex operations which require a high knowledge of services pricing combined with knowledge of exchange use cases. Many parameters are impacted by a voluntary change, such as price of the services, the balances, taxes and so. All the parameters have to be recalculated according to the requested changes, and new pricing records have to be created containing both the reference of the original document and all the information about the new service(s). This is a time consuming process, subject to human errors, and thus very costly for airlines.

Prior art solutions have proposed systems and methods for changing tickets or e-tickets. For example, U.S. Patent Application 208/0114623 A1 from the Assignee discloses a method for checking an already issued airline ticket prior to having a requester submitting a change request to allow him knows all about the permitted options and restrictions prior to requesting the changes.

No solution has been so far proposed for automatically handling the exchange of EMDs in the case of voluntary change requests.

Moreover, the re-pricing of an EMD is a far more complex operation than the re-pricing of a ticket or an e-ticket, one of the reasons being that the price of a new EMD depends among other parameters on the price of the services at exchange time but also on the price of the EMD to be exchanged and the price of the new ticket to which the new EMD will be associated, if any. Therefore, the checks on filing, the determination of new price, the deduction of old amounts remaining in the EMD to be exchanged, the creation of the pricing record with proper original document reference, the penalty and residual value management if any, are some of the steps the travel agents must go through and which are time consuming and error prone.

This situation is to become critical as the number of services included in the reservation files are expected to be growing, which will make the number of EMDs and the number of EMD exchange requests drastically increase.

Thus there is a need for an efficient and reliable solution for the automatic handling of EMDs exchanges in case of voluntary modifications in airline reservations including ancillary services. The present invention offers such solution.

### Summary of the invention

An object of the present invention is to offer a system and method to automatically handle EMDs updating for voluntary changes in airline reservations including ancillary services.

Advantageously, the present invention allows performing complex transactions by collecting data from a variety of sources, adapting and aggregating the data into a single record to process in a single query one or more changes of EMDs for several passengers at the same time.

Another object of the present invention is to provide a flexible layout within a graphical user interface allowing to clearly identifying both the services impacted by the changes and the related documents to be exchanged.

Advantageously, the agent can perform only a partial selection (or no selection at all) of the services, the EMDs and passengers to which applying the exchange. By automatically analyzing the associations between all the elements in the context, the information that has not explicitly entered can be automatically inferred to ease the agent work.

Advantageously, the present invention operates with a variety of pricing engines, by providing a unique interface that adapts the queries to the specificities of each pricing engine to query.

According to a first aspect of the invention, there is provided a method as further described in the appended independent claim 1.

In particular, one aspect of the invention is directed to a computer-implemented method of handling Electronic Miscellaneous Document (EMD) in case of voluntary passenger change in a passenger airline reservation. The method comprises the steps of:
- receiving a request for a voluntary change in a passenger airline reservation, the voluntary change request comprising at least Passenger Name Record (PNR) data;
- retrieving from airline database, EMD data linked to the PNR data;
- determining an EMD exchange can be performed by checking exchange eligibility rules for the PNR data and the EMD data or rejecting the request;

- identifying from pricing record configuration database, EMD pricing data to be repriced;
- identifying one or several airline pricing engines associated to the EMD pricing data;
- generating a pricing query to request each of the one or several airline pricing engines to provide the EMD repriced data ; and
- on receiving the EMD repriced data, preparing the EMD repriced data with the PNR data for updating the PNR.

Further embodiments are described in the appended dependent claims.

According to a second aspect of the present invention, there is provided an apparatus comprising means adapted for carrying out each step of the method according to the first aspect of the invention.

According to a third aspect of the present invention, there is provided a computer readable medium having encoded thereon a computer program comprising instructions for carrying out the steps of the method when the computer program is executed on a computer.

Further advantages of the present invention will become clear to the skilled person upon examination of the drawings and detailed description. It is intended that any additional advantages be incorporated therein.

### Brief description of the drawings

Embodiments of the present invention will now be described by way of example with reference to the accompanying drawings in which like references denote similar elements, and in which:
Figure 1 is a diagrammatic view of an exemplary operating environment including a plurality of computer systems;
Figure 2 is a diagrammatic view of an exemplary computer system of Figure 1;
Figure 3 is a block diagram of an exemplary voluntary service changer system of the present invention;
Figures 4a and 4b are flow charts of the steps performed at the input analyzer component of the present invention;
Figure 5 is a sequence diagram in accordance with an embodiment of the method of the present invention;
Figure 6 illustrates the data provided by the different components and database for the update creation of a new pricing record;
Figure 7 illustrates an exemplary PNR before and after a voluntary change rebooking;
Figures 8a and 8b illustrate an exemplary EMD before and after a voluntary change rebooking associated to the PNR of figure 7.

### Detailed description of the invention

Embodiments of the invention are generally directed to service changer systems, methods, and computer program products to automatically handle the updating of electronic miscellaneous documents in response to passenger-initiated voluntary changes to ancillary services in airline reservations or to flight tickets to which electronic miscellaneous documents are associated. The service changer system may perform complex transactions by collecting data from a variety of different sources, and then adapting and aggregating the collected data into a single record to simultaneously process in a single query one or more changes of electronic miscellaneous documents for several passengers. The service changer system provides a flexible layout within a user graphical user interface that permits the services impacted by the changes to be identified and the related documents to be exchanged. A travel agent can perform only a partial selection (or no selection at all) of the services, the electronic miscellaneous documents, and the passengers to which each exchange is applied. By automatically analyzing the associations between all the elements in context, any information that has not explicitly been entered by the travel agent can be automatically inferred. The service changer system may operate with a variety of pricing engines by providing an interface that adapts queries to the specificities of each individual pricing engine.

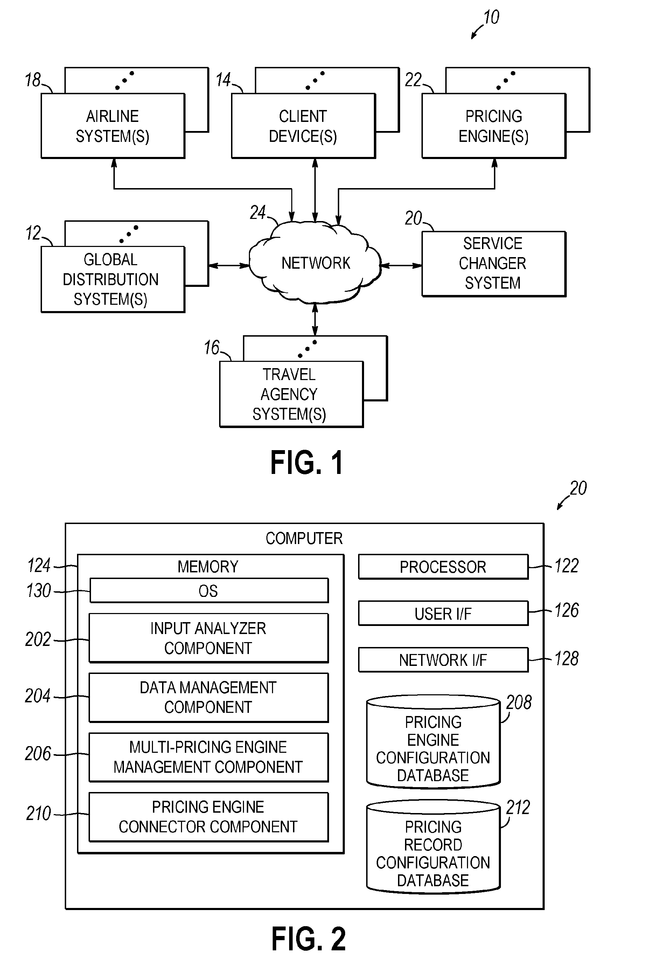

With reference to FIG. 1, an operating environment 10 may include one or more Global Distribution Systems (GDS) 12, one or more client devices 14, one or more travel agency systems 16 constituting indirect seller systems, one or more airline systems 18 constituting carrier systems, a service changer system 20, and one or more pricing engines 22. The GDSs 12, client devices 14, travel agency systems 16, airline systems 18, service changer system 20, and pricing engines 22 may be coupled to a network 24. The network 24 may include one or more private and/or public networks (e.g., the Internet) that enable the exchange of data.

Each GDS 12 may be configured to facilitate communication between the travel agency systems 16 and the airline systems 18 by enabling travel agents, validating carriers, or other indirect sellers to search for available travel products and book reservations on one or more of the airline systems 18 via the GDS 12. To this end, each GDS 12 may maintain a communication link to each airline systems 18 via the communication network 24. These communication links may allow the GDS 12 to obtain scheduling and availability data for travel products from the airline systems 18. Each travel agency system 16 may thereby book flights, as well as trains, hotels, rental cars, or other travel products, from multiple service providers via a single connection to the GDS 12.

In response to a travel product being booked, the GDS 12 may receive and store information about the travel product in a passenger name record (PNR). The PNR may be generated, at least in part, by the airline systems 18, and may comprise one or more reservation records comprised of segments and traveler data associated with one or more booked reservations. PNR segments may be identified, for example, as active (e.g., for a service yet to be provided by the corresponding service provider), passive (e.g., for a service reserved in another system or provided by a third party), past date, flown, information, open (e.g., for a purchased service having an open date), or canceled. The PNR may be stored in a database accessible to GDSs 12, airline systems 18, travel agency systems 16, and service changer system 20. The PNR may be identified by a record locator unique to each PNR, and may include segments defining an itinerary for a particular trip, service, passenger, or group of passengers. The itinerary may include services from multiple carriers (e.g., flights, bus, and or rail segments), hotel reservations, rental car reservations, or any other travel-related services.

Each airline system 18 may include a computer reservation system (CRS) and/or billing system for the respective service provider. The CRS may enable each GDS 12 and/or each travel agency system 16 to reserve ticketed services, such as flights, rail services, hotel rooms, or rental cars, as well as ancillary services associated with the ticketed services. Each airline may own and operate airport ticket offices (ATO) and city ticket offices (CTO) to sell tickets for themselves and/or other airlines. The pricing engines 22 may be hosted at the airline systems 18 or at the GDSs 12, but each is associated with a particular airline. Each airline system 18 may include a reservation system that enables airline ticketing offices, the GDSs 12, and/or the travel agency systems 16 to find, book, and pay for airline tickets.

Each travel agency system 16 may include a server application, such as a web server, that provides a publicly accessible website. This website may be configured to provide access to travel planning features, such as the ability to search for travel products matching a travel request. To this end, each travel agency system 16 may be configured to provide the traveler with access to data from one or more databases hosted by the GDS 12, travel agency systems 16, and/or airline systems 18.

Each client device 14 may be any suitable computing system configured to communicate over the network 24. Each client device 14 may comprise a desktop, laptop, or tablet computer, a smart phone, a personal digital assistant, or any other mobile or fixed computing device that enables the traveler to search for and book travel services over the network 24. For example, each client device 14 may include a client application, such as a web-browser, that communicates with a server application hosted by one of the travel agency systems 16, such as a web-server. The server application may, in turn, communicate with the GDS 12, travel agency systems 16, and/or airline systems 18 to obtain data relating to available travel services so that a traveler may book travel services and be issued electronic documents.

The GDS 12 may access one or more document databases to store and retrieve data relating to electronic tickets or other electronic documents associated with a purchased service. The service changer system 20, which may be hosted by, e.g., a GDS 12 or an airline system 18, may be configured to handle the exchange of electronic miscellaneous documents (EMDs) in response to voluntary passenger modifications to a reservation. The service changer system 20 may be provided by an airline IT solution provider that also provides a network infrastructure for the operating environment 10, and that may offer, among others, hardware and software components for online transactions involving sales tickets and ancillary services. All or a portion of the service changer system 20 may be integrated into one or more of the other systems, such as one of the GDSs 12.

Each EMD may comprise one or more electronic coupons stored in a document database accessible to at least the service changer system 20, with each coupon corresponding to a service provided by the EMD. In response to one or more of the electronic coupons being used, exchanged, or refunded, the document database may be updated to reflect a change in status of the electronic document.

Figure 2 provides a block diagram that illustrates the components of the one or more servers of a computer system that may comprise the service changer system 20 in accordance with an embodiment of the invention. The service changer system 20 may receive and process a request for a voluntary change that is generated and triggered either by a direct or an indirect channel, i.e. through an airline website via one of the client devices 14 or from a cryptic terminal or a GUI terminal at one of the travel agency systems 16.

The service changer system 20 includes at least one processor 122 including at least one hardware-based microprocessor and a memory 124 coupled to the at least one processor 122. The memory 124 may represent the random access memory (RAM) comprising the main storage of the service changer system 20, as well as any supplemental levels of memory, e.g., cache memories, non-volatile or backup memories (e.g., programmable or flash memories), read-only memories, etc. In addition, memory 124 may be considered to include memory storage physically located elsewhere in the service changer system 20, e.g., any cache memory in a microprocessor, as well as any storage capacity used as a virtual memory, e.g., as stored on a mass storage device or on another computer coupled to the service changer system 20.

For interface with a user or operator, the service changer system 20 may include a user interface 126 incorporating one or more user input/output devices, e.g., a keyboard, a pointing device, a display, a printer, etc. Otherwise, data may be communicated to and from another computer or terminal (e.g., GDSs 12, client devices 14, travel agency systems 16, airline systems 18, and pricing engines 22) over a network interface 128 coupled to the communication network 24. The service changer system 20 also may be in communication with one or more mass storage devices, which may be, for example, internal hard disk storage devices, external hard disk storage devices, external databases, storage area network devices, etc.

The service changer system 20 typically operates under the control of an operating system 130 and executes or otherwise relies upon various computer software applications, components, programs, objects, modules, engines, data structures, etc. In particular, the components may include an input analyzer component 202, a data management component 204, a multi-pricing engine manager component 206, and a pricing engine connector component 210, and may comprise instructions that may be resident and/or stored in the memory 124.

The service changer system 20 may include one or more databases including, for example, a pricing engine configuration database 208 and a pricing record configuration database 212. Each of the databases 208, 212 may comprise data and supporting data structures that store and organize the data. In particular, each of the databases 208, 212 may be arranged with any database organization and/or structure including, but not limited to, a relational database, a hierarchical database, a network database, and/or combinations thereof. A database management system in the form of a computer software application executing as instructions on the processing unit of the service changer system 20 may be used to access the information or data stored in records of the databases 208, 212 response to a database query.

Moreover, various applications, components, programs, objects, modules, engines etc. may also execute on one or more processors in another computer coupled to the service changer system 20 via the communication network 24, e.g., in a distributed or client-server computing environment, whereby the processing required to implement the functions of a computer program may be allocated to multiple computers over a network. For example, some of the functionality described herein as being incorporated into the service changer system 20 and/or components of the service changer system 20 may be implemented in one or more servers. Consistent with embodiments of the invention, the components, modules, applications, and/or engines may be executing on one or more servers of the service changer system 20, and may cause the processor 122 of the service changer system 20 to perform operations consistent with embodiments of the invention.

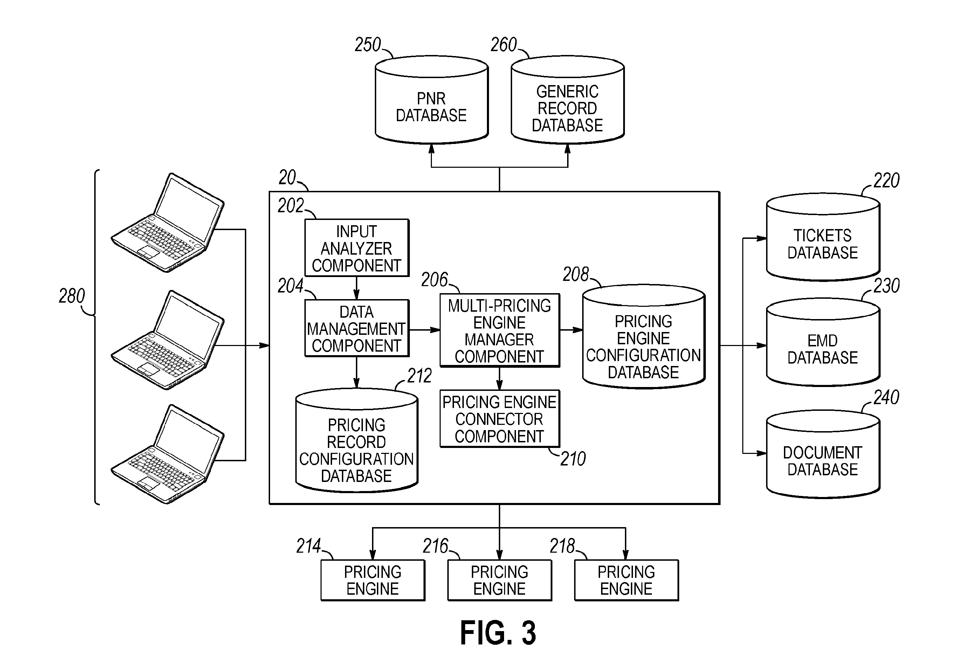

Figure 3 depicts a block diagram of an airline service changer system 20 for voluntary change "ASC Voluntary" of the present invention in a preferred embodiment. The ASC Voluntary system 20 performs all the operations of handling a voluntary service change in accordance with the method of the present invention as further described. The voluntary service changes cover the cases where a traveler or passenger decides to request for a change in his initial reservation. A voluntary change request is generated and triggered either by a direct or an indirect channel, i.e. through airline websites or GUI/cryptic terminals, all shown as Client Terminal 280.

The ASC Voluntary system 20 is coupled to various components having a variety of databases to store documents involved in the process, such as electronic tickets (ticket database 220), EMDs (Electronic Miscellaneous Document database 230), or other generic documents (Document database 240), as well as information on reservation, in the form of a PNR (Passenger Name Record database 250) or other type of record (Generic Record database 260).

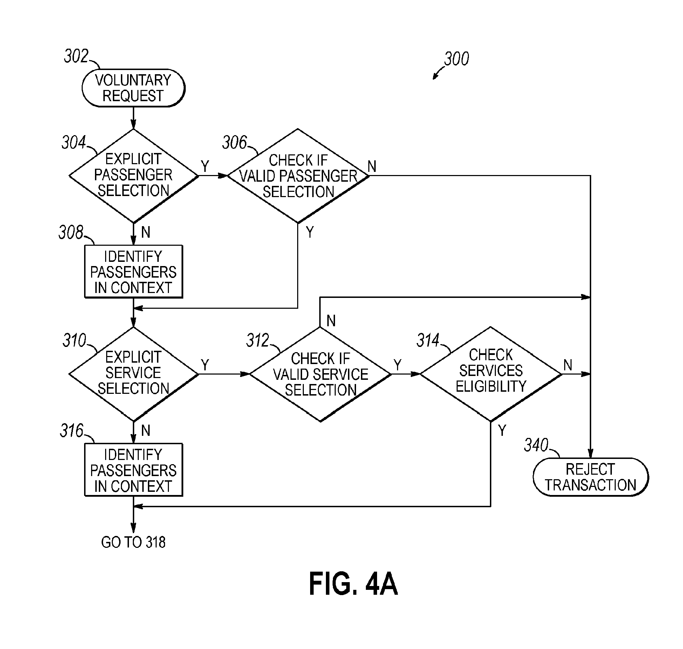

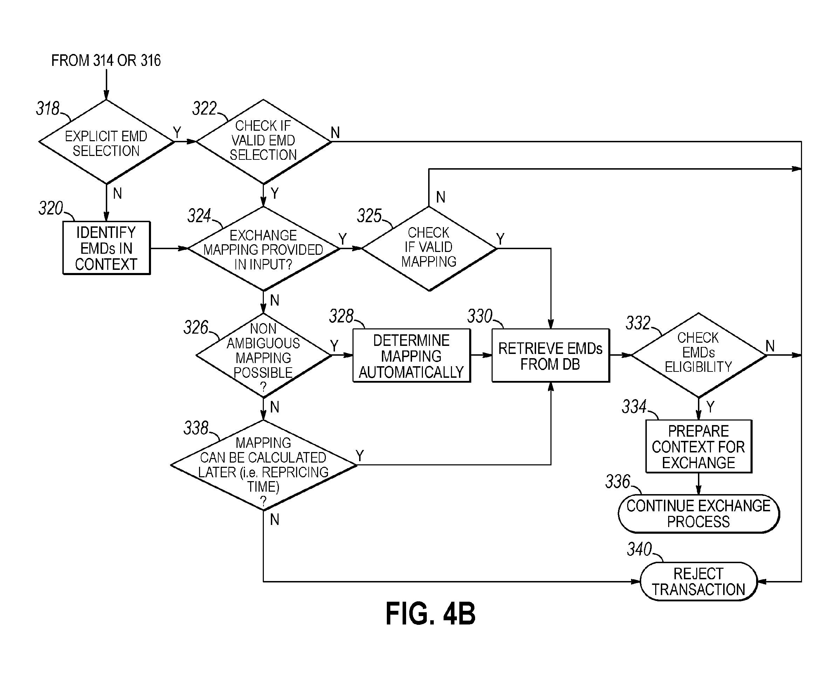

The ASC Voluntary system 20 is further coupled to various pricing engines devices (214, 216, 218) providing airfares information along with rules associated with the fares in a format suitable for computer processing. The pricing engines may be ones based on the Airline Tariff Publishing Company (ATPCo) or other heterogeneous external airline pricing systems. The content and operating mode of the ASC Voluntary system 20 is further discussed in conjunction with Figures 4-6.

The ASC Voluntary system 20 includes an Input Analyzer component 202 for verifying the validity of a voluntary change request. The input analyzer component 202 comprises means for receiving a voluntary change request from a requester terminal 280. The request to be processed may require performing one or several exchanges, each of them from one or more EMDs to one or more services for a given passenger.

The information on the services to be included in the exchange can be either explicitly selected by the agent in the request or it can be automatically identified from the context of the request by a process run at the Input Analyzer. The input analyzer component 202 comprises means for retrieving from an EMD database 230 using the passenger name record, one or several original EMD associated to the passenger airline reservation, and for determining that the voluntary change request is eligible to an exchange of the one or several original EMD or for rejecting the request. The input Analyzer component also includes means for issuing a notification to the requester terminal for informing of the validation of the voluntary change request or of the rejection.

After a validity checking process 300 detailed below with description of figures 4a and 4b, the voluntary change request is further processed by a Data Management component 204. Generally, the Data Management component 204 is in charge of several operations to allow generating a new pricing record linked to the passenger name record and to a new EMD including all the updates and prices for all the changes, as well as related fare elements required for issuance processing (original issue, endorsement, etc...). It is also to be appreciated that besides the pricing record that will constitute the basis for the reissued EMD, and depending on the repricing output it is possible to create a residual value record, that will result in a residual value EMD of a specific amount that is not used in the exchange but that can be returned back to the passenger according to the airline rules and practices.

The Data Management component 204 is also coupled to a Pricing Record Configuration database 212 which stores pricing records configurations of different airlines.

The Data Management component 204 is further coupled to a Multi Pricing Engine component 206 in charge of collecting the PNR data and airlines rules information for selecting the correct pricing engine (214, 216, 218) corresponding to the EMD to handle. The Multi Pricing Engine component 206 is coupled to a Pricing Engine Configuration database 208 which stores airline configuration rules, the elements and parameters for allowing the selection of the pricing. For instance, an airline can be configured to always price its services through an ATPCO filing, another one may want its proprietary system to be the only one in charge of pricing for their services. An airline may also decide to price its services through ATPCO except, for instance, the class upgrade services, that according to its policy are priced in miles through their own specific systems.

The Multi Pricing Engine component 206 is further coupled to a Pricing Engine Connector 210 to interface with the plurality of pricing engines. The Pricing Engine Connector 210 allows formatting with the respective airline configuration rules, repricing queries to be sent to the pricing engines, and receiving the responses with the computed fares from the queried pricing engines. The Pricing Engine Connector 210 further allows gathering the data obtained from each pricing engine to organize them in a common model to be provided back to the Data Management component to finalize the exchange process.

Figures 4a and 4b show the steps performed at the Input Analyzer component 202 in accordance with an embodiment of the invention. The process 300 begins when a voluntary change request is received on step 302. At this step, all data required for the exchange process must be gathered, including information on passengers and services impacted by the voluntary change. As previously explained, the Input Analyzer is in charge of verifying the validity of the requested exchange. One advantage of the process is to automatically retrieve the missing information (done through steps 308, 316, 320, 328) if the change request does not define all the elements involved for the exchange.

After the receipt of the voluntary change request, the process allows on step 304 to determine if all the passengers for which the exchange has to be performed are identified in the request by appropriate passenger selections from the agent. If the passenger selections are clearly mentioned (branch Yes) the next step 306 is to check the validity of the passengers' selections. For example, if the passenger exists in the context and if the request is coherent in general with this context (e.g. in the request it is mentioned "pax infant 1" and if "pax 1" exists but for an adult, then the check fails. If the passenger selections are not valid, the process ends 340, otherwise the process goes to step 310.

Going back to step 304, if the passenger selections are not mentioned in the request (branch No) the process allows to automatically retrieve all the passengers involved in the current context of the change on step 308.

After the passengers identification steps (304, 306, 308) the process allows checking the validity of the change request at services level by controlling several eligibility criteria.

On step 310, the process checks if the new services are mentioned in the request. If yes, the process checks on next step 312 the validity of the services selections in the request, i.e. if the service exists in the context or if it is associated to the selected passenger. If the services selections are not valid, the process ends 340, otherwise the process goes to step 314.

On step 314, the process allows checking the eligibility of the selected services to voluntary changes. If the services are not valid, the process ends 340, otherwise the process goes to step 318. The eligibility is defined through several rules determining which services can be targeted by an exchange and which cannot. For instance, all the services that cannot be priced could be excluded from exchange. Another eligibility rule can be based on the date of the service, where for example past dated services are excluded from the exchange.

Going back to step 310, if the services are not explicitly selected by the agent in the request, the process allows on step 316 to use the predefined eligibility criteria to filter services in the PNR, in order to discard the non eligible services from exchange process. And the process continues on step 318 as illustrated on figure 4b.

On step 318, the process checks if the EMD(s) is/are explicitly defined in the request. If yes, the process checks on next step 322 the validity of the EMD selections in the request. For example, it is checked if the selection is done by a reference in the PNR, if it exists and corresponds to an EMD, or if it is an EMD number, the process checks the existence in the EMD DB. If the EMD selections are not valid, the process ends 340, otherwise the process goes to step 324. On step 324, a test is performed to check if a mapping between documents and services is provided in the request. For example, if the request contains two separate lists, one with the EMDS and one the services, or either a list of associations between EMD and services like "EMD1-SRV1-2, EMD2-SRV3-4".

Going back to step 318, if the EMD selections are not mentioned in the request (branch No), the process allows on step 320 to automatically identify and retrieve all the EMDs involved in the current context of the change, and the process continues on step 324.

On step 324, if no mapping document is found in the request (branch No), the process goes to step 326, otherwise the process continues to step 325. On step 325, a test is performed to check if the mapping is valid or not. If not, the process ends on step 340. For example, several services can be requested to be included in the same exchange but if they don't have the same RFIC code, they cannot be in the same pricing record, and the mapping is considered not valid. If the mapping document is valid, the process goes to step 330.

Going back to step 326, meaning that no mapping document is provided in the input request, the process allows determining its own mapping between EMDs and services mainly on the basis of passenger association. A test is performed to determine if a single mapping document can be selected for the current change context. If no single mapping document can be selected (branch No), the process goes to step 338 to determine if the mapping operation can be determine at later stage of the exchange process. This could be the case for example if it is not possible to infer all exchanges from the PNR and have pricing engines to provide a feature to calculate the mapping based on amount balances. If the mapping cannot be postponed (branch No) the process ends on step 340, otherwise the process goes to step 330.

If test 326 provides one single mapping document result, the process continues on step 328 to determine automatically the mapping document to be applied to the exchange request. And the process goes to step 330.

On step 330, the process allows automatically retrieving the EMDs to be selected for the voluntary change request from the EMDs database 230.

On next step 332, a test is performed to check the eligibility of each EMD retrieved on previous step based on predefined eligibility rules. For example, an EMD that has a coupon already on exchanged or reissued status is not eligible to current request of voluntary exchange. For EMD not eligible, the process ends 340, otherwise for eligible EMDs, the process goes to step 334.

On step 334, the process allows preparing an updated PNR for each passenger. For instance, if previous pricing records are present in the existing PNR for the rebooked services, they are deleted.

After step 334, the process continues the exchange process on step 336.

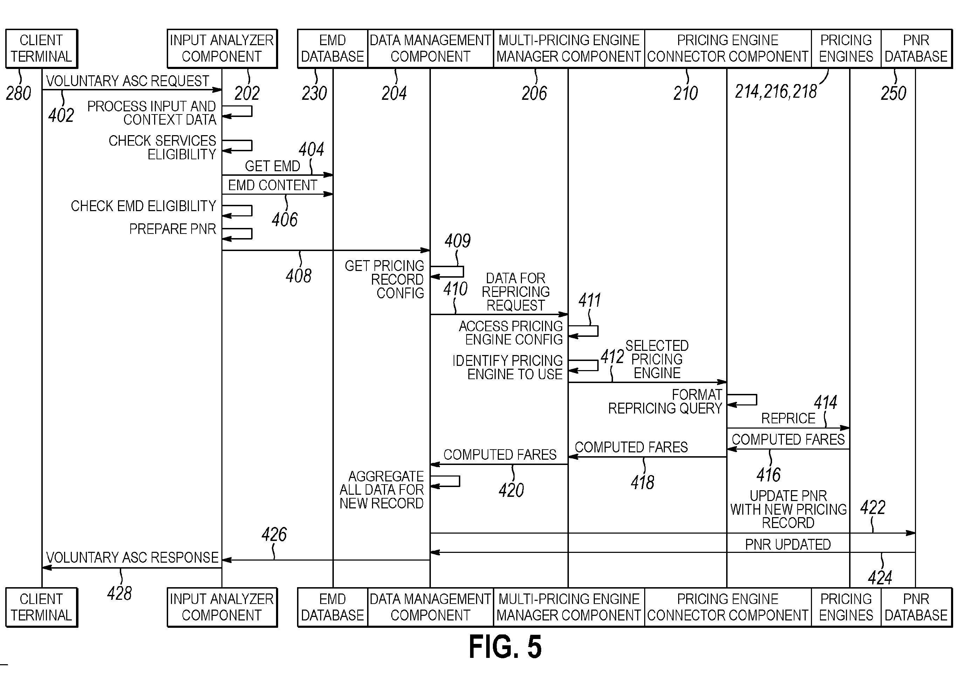

Going to figure 5, a sequence diagram is shown to illustrate the data flow between the components of the present invention in accordance with an embodiment. References to the components of figures 2 are the same.

The first data flow 402 consists in receiving at the Input Analyzer, a request for voluntary services changes. The content of the request is analyzed and eligibility of the request is checked as detailed with reference to figure 4a.

The next data flow 404 consists for the Input Analyzer to query the EMD database 230 to retrieve the EMD corresponding to the request and to send it back on next data flow 406. At reception of the EMD, the Input Analyzer 202 finalizes the overall request checking process as described in figure 4b and prepares the PNR for pursuing the process.

Next data flow 408 consists in providing the PNR data to the Data Management component 204 which is globally in charge of aggregating all data to perform the EMD exchange by operating the following sub-processes. The Data Management component retrieves the configuration of the PNR from the Pricing Record Configuration database 212, and sends on data flow 410 a request for getting the repricing information to the Multi Pricing Engine component 206. The latter get from the Pricing Engine Configuration database 208 the pricing engine selection rules to identify the pricing engine to query for the exchange. Advantageously, the Multi Pricing Engine component 206 is designed to handle the plurality of existing situations to repricing services depending of the airline industry, as not all airlines provide prices for flights and ancillary services in the same way. Some airlines use the ATPCO filing while others store their pricing rules on their own servers, providing interfaces for the GDSs to access them.

The pricing engine selection rules and the PNR data are sent on data flow 412 to the Pricing Engine Connector 210 which is in charge of formatting a repricing query in the format required by each pricing engine interface. The Pricing Engine Connector allows sending on data flow 414 a query for repricing to the one or several Pricing Engines identified for repricing and receiving on data flow 416 the computed fares from each pricing engine queried.

Next data flow (418, 420) consists in sending the received computed fares to the Data Management module 204 which is in charge of aggregating all data. The Data Management module 204 after receiving the fare computation contains all data to fill a new pricing record from which the issuance step will generate the reissued EMD. Therefore, it can proceed to update the PNR of this record as well as all the related fare elements required for issuance processing (original issue, endorsement, etc...). Besides the pricing record that will constitute the basis for the reissue EMD, a residual value record may be created, depending on the repricing output, that will result in a residual value EMD containing an amount not used in the exchange that can be returned to the passenger according to airline rules and practices.

Next data flow 422 consists in updating the PNR database 250 with the new pricing record and to receive on next flow 424 the updated PNR.

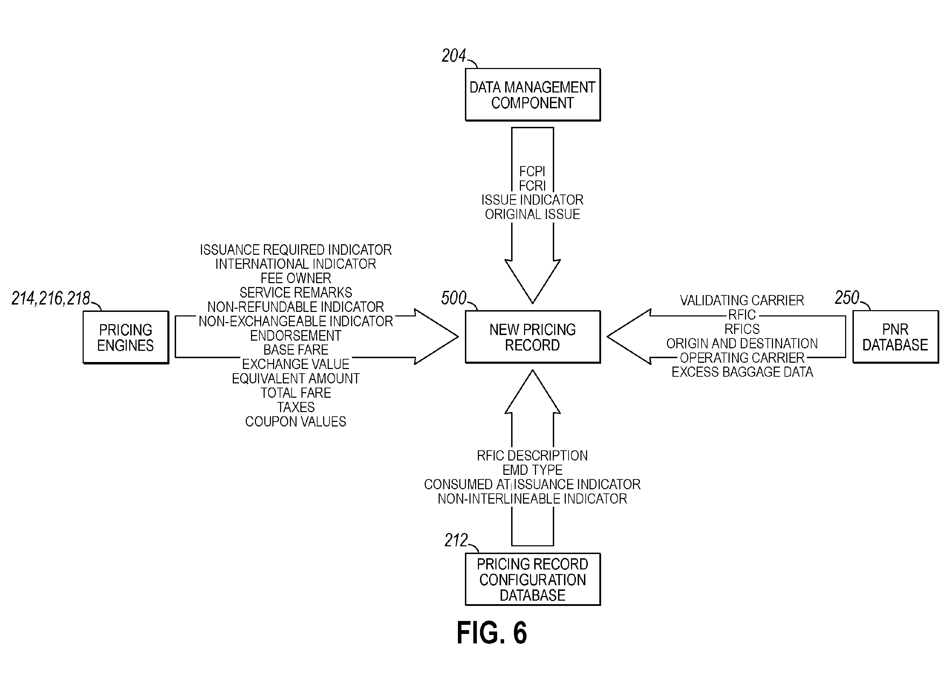

Figure 6 illustrates the aggregation of all the data provided by the different components and database for the creation of the new pricing record 500.

Next data flow 426 of the exchange process consists in providing the updated PNR to the Input Analyzer which then sends back on data flow 428 the result of the voluntary change process to the Client terminal 102.

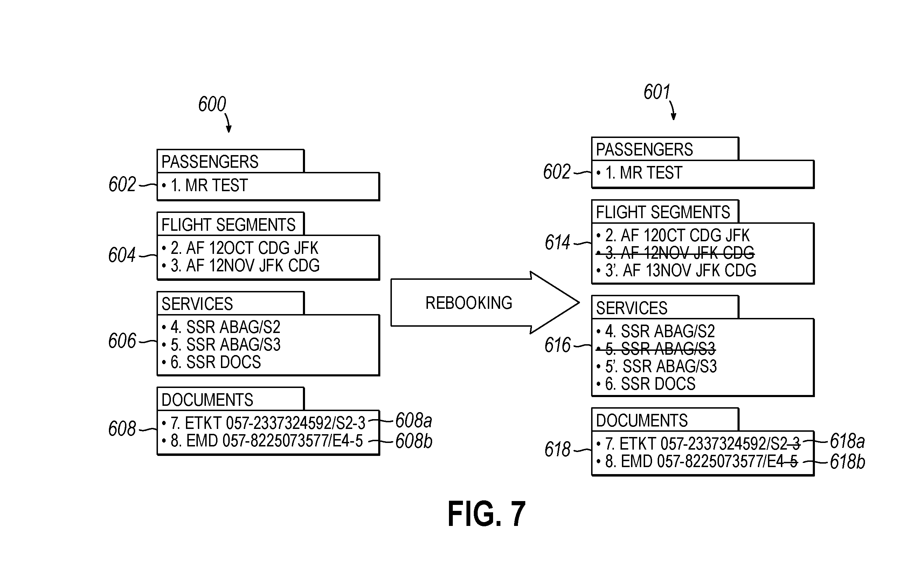

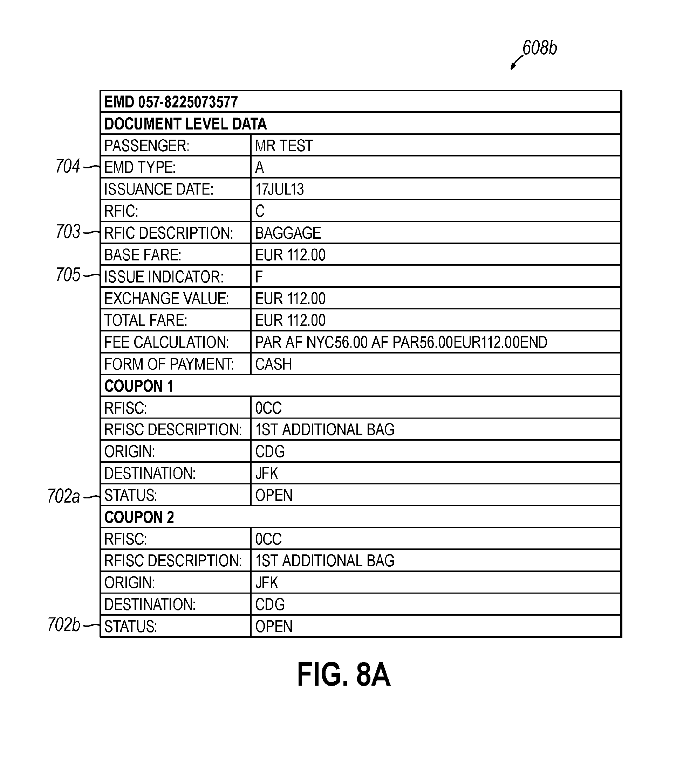

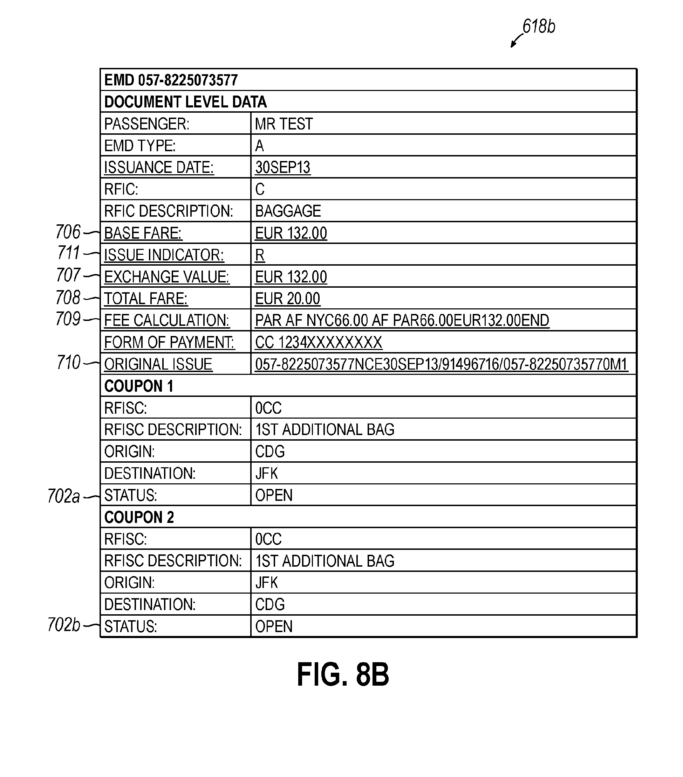

Reference is now made to figure 7 which illustrates an exemplary PNR before and after a voluntary change rebooking and to figures 8a and 8b which illustrate an exemplary EMD before 608b and after 618b processing of the change request of figure 7.

The following description is made in the context as shown on the left of figure 7 of a passenger (1.Mr. TEST 602) who is reserved (Flight Segments 604) on a flight from Paris to New York on the 12^{th} of October (2.AF 120CT CDG JFK), with a return on the 12^{th} of November (3.AF 12NOV JFK CDG). Ancillary services 606 are requested for an additional baggage for the whole itinerary (4.SSR ABAG/S2 and 5.SSR ABAG/S3). The documents 608 generated for Mr. TEST booking are an e-ticket 608-1 (7.ETKT 057-2337324592/S2-3) for the flight and an EMD 608-2 (EMD 057-822073577/E4-5) for the services.

In the exemplary scenario, after a while Mr. Test decides to stay in New York a day longer. Therefore he contacts the airline agency to rebook a different flight for the day after. The old flight and the service associated to it are deleted from Mr. TEST's reservation and they are replaced by a new flight (3'.AF 13NOV JFK CDG) with a different date and a new additional service 616 (5'.SSR ABAG/S3) for the baggage associated to this new flight. Other documents are still valid but they only apply to the portion of the itinerary that has not been rebooked. The agent has to exchange the old documents with the new reservation. Since the e-ticket exchange does not fall in the scope of the present invention, it is not further detailed herein, and only the EMD exchange is now detailed.

The agent from his or her client terminal 280 (e.g. a cryptic terminal) displays the PNR of the customer as rebooked with the new itinerary. He sends an EMD exchange request preferably using a cryptic command of the type 'FXQ/EMD'. In the example, no parameters are explicitly selected. The current PNR context (with passengers, flight segments, services and documents included in the reservation), is taken into account in the request. As already detailed, the Input Analyzer module 202 processes the context identifying the following elements for the exchange:
- Passenger: (1.Mr TEST) is the only passenger in the PNR.
- SSRs: (4.SSR ABAG/S2) (5'.SSR ABAG/S3). While there is a third service in the PNR (6.SSR DOCS) this service is set as non chargeable and is considered non eligible to the exchange.
- EMD: (8.EMD 057-8225073577): only one EMD is referenced in the PNR for passenger 1.

As already described on data flow 404, it is necessary to verify the data contained in the EMD (608b). The EMD database is queried to retrieve the entire EMD document for analyzing its content to determine the conditions for its eligibility. The coupon status is verified. In the example as shown on figure 7a, the EMD has two coupons (702a, 702b) in status "open" meaning the EMD document is eligible to an exchange.

The next steps of Mr TEST's EMD exchange, is to retrieve from the Pricing Record Configuration database the configuration information for the considered service, i.e. for the additional baggage 'ABAG'. For the considered example, the configuration information includes:
- RFIC description (703) : BAGGAGE. The RFIC which stands for Reason for Issuance Code defines which group of services an EMD belongs to;
- EMD type (704): "A" (i.e. flight associated);
- Consumed at issuance indicator (705): "F" (i.e. FALSE);
- Non interlineable indicator (not shown): FALSE.

As already detailed, at this point of the process, it is necessary to obtain all fare and amounts that will fill the new pricing record. The Multi Pricing Engine component accesses the Pricing Engine Configuration database to check which pricing engine is in charge of the repricing for the current context. In the example, for the considered airline and services, the selected pricing engine is the one based on ATPCO filing.

This selection together with the current transaction data is forwarded to Pricing Engine Connector which is the component of the ASC Voluntary system having the parameters corresponding to each specific interface of each pricing engine. In the considered example, the Pricing Engine Connector fills the repricing request with the necessary data according to the ATPCO pricing engine requirements and sends the request to the correct pricing engine and receives the computation results.

When pricing engine results are received by the Pricing Engine Connector, they are adapted to a format independent from the engine which has provided them, to uniformly allow handling any data the same way. For the considered example, the pricing data received from the Pricing Engine are the following:
- Issuance required flag: TRUE
- International indicator: "I" (i.e. for international)
- Fee owner: (AF) for Air France
- Non-refundable indicator : FALSE
- Non-exchangeable indicator: FALSE
- Base fare (706): 132.00 EUR;
- Exchange value (707): 132.00 EUR;
- Total fare (708): 20.00 EUR, being the difference between the new price and the EMD amount.

Last remaining data to fill the new pricing record are computed by the Data Management module. For the current scenario, the following data are computed:
- Issue indicator (711): "R" for reissue;
- Original issue: contains the reference to the exchanged EMD and coupons, as well as the exchange date, and the IATA number of the office;
- FCPI (Fare Calculation Pricing Indicator) and FCRI (Fare Calculation Reporting Indicator) flags (not shown): both flags are set to '0' to indicate that the calculation is automatic, since it comes from a pricing engine.

The exchange is finalized by updating the context with all the information processed. Most of these data will be part of the new pricing record that will be used to generate the new EMD at issuance time. Some of them can be stored in different elements of the PNR but still with links to the main pricing record, such as the original issue or the endorsement. All these elements are created for the PNR and they will be available at issuance for the new document preparation.

A response is returned to the agent to communicate the successful transaction. Then, the agent is able to check the output of the transaction with all computed amounts, and additional collection or penalty fees if any. The issuance of the new EMD may be obtained without performing any other manual operation. Figure 7b shows the new EMD issued for the described example with all modifications and repricing information updated. The repricing information are the Base Fare (706), the Exchange Value (707), the Total Fare (708), the Fee Calculation (709). The new EMD further includes a link with the original issue (710).

Figure 8b shows the new exemplary EMD 618b issued for the example of Mr. Test's EMD exchange with all modifications and repricing information updated. The repricing information includes the base fare 706, the exchange value 707, the total fare 708, the fee calculation 709, and a link with the original issue data 710. The new e-ticket 618a (7.ETKT 057-2337324592/S2-3) for the flight is also present as a document in the PNR 601, as well as an EMD 608b (EMD 057-822073577/E4-5) for the services. The update to the flight segments 614 as a result of the re-ticketing is also apparent in the PNR 601.

It is to be appreciated that the description is based on a simplified example for sake of clarity, but the person skilled in the art may devise all variants from the described example without departing from the spirit and scope of the invention. Particularly, depending on the change request, the service changer system 20 may exchange several EMDs for each passenger and for several passengers at the same time. The service changer system 20 may be accessed through a flexible graphical user interface that offers clear and efficient entries to an agent to specify several exchange combinations that can be processed in one shot, thereby saving time. The service changer system 20 may offer an integrated solution, including all necessary checks of amounts and data, to allow that a transaction context is properly updated in order to provide agents and customers with clear visibility on the services being exchanged.

To recall the benefits of the present invention is to offer an integrated solution, including all necessary checks of amounts and data, to allow that a transaction context is properly updated in order to provide agents and customers with clear visibility on the services being exchanged, so that reissuance can take place in one step. Results are returned in a couple of seconds.

Thus, methods, systems, and computer program products for handling electronic miscellaneous documents in response to voluntary modifications of services have been described. A request, which includes first data for a passenger name record, is received for the airline reservation change. Second data for a first electronic miscellaneous document, which is linked to the first data for the passenger name record, is also received. A determination is made as to whether the first electronic miscellaneous document can be exchanged by applying at least one exchange eligibility rule to the first and second data. If the first electronic miscellaneous document can be exchanged, a fare for a service associated with the first electronic miscellaneous document is obtained from a pricing engine associated with the first electronic miscellaneous document. In response to receiving the fare for the service, the passenger name record is updated with a second electronic miscellaneous document including the fare for the service.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described.

## Claims

1. A computer implemented method of handling Electronic Miscellaneous Document (EMD) in case of voluntary passenger change in a passenger airline reservation, the method comprising the steps of:
- receiving a request for a voluntary change in a passenger airline reservation, the voluntary change request comprising at least Passenger Name Record (PNR) data;
- retrieving from airline database, EMD data linked to the PNR data;
- determining an EMD exchange can be performed by checking exchange eligibility rules for the PNR data and the EMD data or rejecting the request;
- identifying from pricing record configuration database, EMD pricing data to be repriced ;
- identifying one or several airline pricing engines associated to the EMD pricing data;
- generating a pricing query to request each of the one or several airline pricing engines to provide the EMD repriced data ; and
- on receiving the EMD repriced data, preparing the EMD repriced data with the PNR data for updating the PNR.

2. The computer-implemented method of claim 1 further comprising the step of issuing a notification informing of the validation of the voluntary change request.

3. The computer-implemented method of any preceding claim wherein the step of identifying EMD pricing data consists in retrieving configuration of the PNR from the pricing record configuration database.

4. The computer-implemented method of any preceding claim wherein the step of identifying one or several airline pricing engines consists in collecting additional PNR data, airlines rules and configuration information.

5. The computer-implemented method of any preceding claim wherein the step of generating a pricing query consists in configuring with the EMD pricing data a pricing query in a format adapted to the one or several airline pricing engines identified.

6. The computer-implemented method of any preceding claim wherein the step of preparing the EMD repriced data and the PNR data consists in aggregating the EMD repriced data and the PNR data for issuance processing.

7. The computer-implemented method of any preceding claim further comprising the step of including the EMD repriced data in the PNR at time of issuance.

8. The computer-implemented method of any preceding claim wherein the voluntary change request further comprises one or several services to be changed.

9. The computer-implemented method of any preceding claim wherein the voluntary change request is triggered by an airline website, or by a cryptic terminal or by a GDS or by a travel agent.

10. A computer readable medium having encoded thereon a computer program comprising instructions for carrying out the steps of the method according to any one of claims 1 to 12 when said computer program is executed on a computer.

11. A system for handling Electronic Miscellaneous Document (EMD) in case of voluntary passenger change in a passenger airline reservation, the system comprising :
- an input analyzer component comprising:
- means for receiving a request for a voluntary change in a passenger airline reservation, the voluntary change request comprising at least Passenger Name Record (PNR) data;
- means for retrieving from airline database, EMD data linked to the PNR data;
- means for checking exchange eligibility rules for the PNR data and the EMD data; and
- means for issuing a notification for informing of the validation of the voluntary change request or of the rejection;
- a data management component comprising :
- means for identifying from pricing record configuration database, EMD pricing data to be repriced; and
- means for updating the PNR;
- configuration component comprising :
- means for identifying one or several airline pricing engines associated to the EMD pricing data;
- means for generating a pricing query to request each of the one or several airline pricing engines to provide the EMD repriced data; and
- means for receiving responses from the one or several airline pricing engines.

12. The system of claim 13 further comprising means adapted for carrying out each step of the method according to any one of the claims 1 to 9.
